# FASCICULE DE BREVET EUROPEEN

(11) **EP 3 502 014 B1**
(45) Date de publication et mention de la délivrance du brevet: **12.01.2022**
(21) Numéro de dépôt: 18153495.9
(22) Date de dépôt: 25.01.2018
(51) Int. Cl.: B65G 23/04, B65G 23/34

(54) **SYSTÈME DE DISTRIBUTION CONTRÔLÉE DE COMPOSANTS**
KONTROLLIERTES VERTEILUNGSSYSTEM VON KOMPONENTEN
SYSTEM FOR CONTROLLED DISTRIBUTION OF COMPONENTS

(30) Priorité: 21.12.2017 CH 15972017
(43) Date de publication de la demande: 26.06.2019
(73) Titulaire: ETA SA Manufacture Horlogère Suisse, 2540 Grenchen (CH)
(72) Inventeur: Charbonnet, Frédéric, 1996 Basse-Nendaz (CH)
(74) Mandataire: ICB SA

(56) Documents cités:
- WO-A1-2016/115584
- JP-A- H0 871 865
- US-A- 2 444 134
- US-A- 3 224 553
- US-A1- 2003 066 735
- US-A1- 2009 260 954

## Description

### Domaine technique

La présente invention concerne un système de distribution contrôlée de composants notamment de composants horlogers pour une installation d'assemblage automatique de tout ou partie d'une pièce réalisée à partir d'au moins un de ces composants, notamment d'une pièce d'horlogerie et une telle installation d'assemblage automatique.

### Art antérieur

Dans l'état de la technique, il est connu d'utiliser un bol vibrant dans un système de distribution de composants par exemple de composants horlogers comme dans le cadre d'une installation d'assemblage automatique de pièces d'horlogeries. Un tel bol est classiquement monté sur un support générant des vibrations qui impriment à ces composants horlogers généralement légèrement huilés, un mouvement de rotation autour d'un axe de révolution vertical de ce bol. Un tel mouvement conduit ces composants horlogers à s'engager sur une rampe définie sur la paroi latérale du bol, et à s'élever progressivement jusqu'au sommet de cette paroi. Dans cette configuration, les composants qui se présentent à ce sommet peuvent alors s'engager dans un couloir d'alimentation défini dans la continuité de cette rampe en étant fixé à cette paroi latérale du bol. Ce couloir d'alimentation s'étend longitudinalement selon une direction parallèle à une tangente à une paroi périphérique externe de ce bol perpendiculaire à un plan comprenant l'axe de révolution vertical de ce bol. Un tel couloir vise à alimenter un support de distribution défini au sommet de la paroi et s'étendant vers l'extérieur du bol sur laquelle sont disposés les composants provenant du couloir devant être saisis par un bras de préhension pour être distribués à une machine d'assemblage de l'installation d'assemblage automatique en prévision de la réalisation de tout ou partie d'une pièce d'horlogerie.

Toutefois de tels systèmes de distribution de composants horlogers manquent souvent de fiabilité dans le cadre de leur fonctionnement. En effet, ils sont régulièrement sujets à des disfonctionnements pouvant résulter d'une accumulation excessive de composants sur la rampe ou encore au niveau du couloir d'alimentation émanant de coincements dans ce couloir engendrés par ces composants légèrement huilés ou présentant une géométrie imparfaite. Dans ces conditions, une intervention manuelle est systématiquement nécessaire pour remettre le système en état de fonctionnement.

De plus on notera que dans ces systèmes de distribution, les composants horlogers qui ne sont pas saisis correctement par le bras de préhension tombent systématiquement à l'extérieur du bol vibrant ce qui engendre des pertes qui ont une incidence sur une augmentation non négligeable des coûts de production de telles pièces d'horlogerie. WO 2016/115584 A1 décrit un système selon le préambule de la revendication 1.

### Résumé de l'invention

Un but de la présente invention est par conséquent de proposer un système de distribution contrôlée de composants notamment de composants horlogers permettant de surmonter les inconvénients de l'état de la technique en améliorant la fiabilité du dispositif vibrant constituant ce système.

Dans ce dessein, l'invention porte sur un système de distribution contrôlée de composants selon la revendication 1, notamment de composants horlogers pour une installation d'assemblage automatique de tout ou partie d'une pièce réalisée à partir d'au moins un de ces composants, notamment d'une pièce d'horlogerie, le système comprenant :
- un dispositif vibrant dans lequel lesdits composants sont introduits en vrac qui est pourvu de premier et deuxième compartiments reliés entre eux en leurs extrémités par des première et deuxième zones de passage de ce dispositif de manière à former un circuit fermé dans lequel les composants sont susceptibles de circuler, et
- un bras de préhension articulé prévu pour assurer la distribution desdits composants à ladite installation d'assemblage automatique,
le dispositif vibrant comprenant des premier et deuxième plans inclinés en sens opposés compris respectivement dans les premier et deuxième compartiments, lesdits composants étant susceptibles de cheminer le long des premier et deuxième plans inclinés vers une plateforme d'alimentation sur laquelle est susceptible d'être disposé au moins un composant en prévision de sa saisie par le bras de préhension articulé, ladite plateforme d'alimentation étant située dans le deuxième compartiment à une sortie du deuxième plan incliné.

Dans d'autres modes de réalisation :
- la plateforme d'alimentation est agencée dans le deuxième compartiment dans la continuité du deuxième plan incliné en étant reliée mécaniquement à ce deuxième plan incliné ;
- la plateforme d'alimentation s'étend longitudinalement entre la sortie du deuxième plan incliné et le deuxième zone passage ;
- la plateforme d'alimentation comprend des première et deuxième parties ;
- la première partie qui présente une longueur supérieure ou sensiblement supérieure à une longueur de la deuxième partie, et une largueur inférieure ou sensiblement inférieure à une largueur de la deuxième partie ;
- la première partie comprend une face supérieure plane formant un support sur lequel les composants sont susceptibles de se déplacer en vue de leur saisie par le bras de préhension articulé ;
- la première partie s'étend de manière rectiligne en ayant sa face supérieure comprise dans un plan comportant une surface plane du deuxième plan incliné ;
- la première partie de la plateforme d'alimentation comprend la face supérieure pourvue d'une zone de distribution comprise sensiblement à son extrémité libre et dans laquelle zone est disposé le composant en prévision de sa saisie par le bras de préhension articulé ;
- la face supérieure présente un dénivelé avec un fond du deuxième compartiment en étant agencée dans ce deuxième compartiment au-dessus de ce fond ;
- la première partie de la plateforme d'alimentation comprend un détecteur de présence du composant agencé dans la zone de distribution ;
- selon l'invention, deuxième partie de la plateforme d'alimentation comprend deux portions de guidage ;
- les portions de guidage sont définies pour diriger les composants vers des parois latérales du deuxième compartiment au moins un composant initialement présent sur la première partie de cette plateforme d'alimentation et qui en est évacué ;
- le dispositif vibrant comprend un dispositif de tri/sélection des composants défini à proximité de la première partie de la plateforme d'alimentation notamment apte à diriger un flux de fluide tel que de l'air vers une face supérieure de la première partie ;
- le dispositif vibrant comprend un dispositif de séparation d'au moins deux composants agencé au-dessus de la zone de distribution ;
- la première zone de passage comprend les extrémités des premier et deuxième compartiments ainsi qu'un dénivelé présent entre les premier et deuxième plans inclinés définis dans ces extrémités avec le premier plan incliné qui est localisé au-dessus du deuxième plan incliné ;
- la deuxième zone de passage comprend les extrémités des premier et deuxième compartiments ainsi qu'un dénivelé présent entre le premier plan incliné et le fond définis dans ces extrémités avec le fond qui est localisé au-dessus du premier plan incliné ;
- la première zone de passage comprend une trappe prévue pour fermer/ouvrir une ouverture pratiquée dans le deuxième plan incliné permettant d'évacuer les composants du dispositif vibrant, et
- le composant est sélectionné parmi des composants notamment comprenant des objets de révolution de taille millimétrique.

L'invention porte aussi sur une installation d'assemblage automatique selon la revendication 19 de tout ou partie d'une pièce réalisée à partir d'au moins un composant, notamment d'une pièce d'horlogerie, comprenant au moins un tel système de distribution contrôlée de composants.

Ainsi grâce à ces caractéristiques, le système de distribution permet ainsi d'améliorer la circulation des composants notamment des composants horlogers dans le dispositif vibrant ainsi que l'optimisation du tri de ces derniers en ne prévoyant plus de couloir d'alimentation mais une plateforme d'alimentation qui est donc découverte. De plus, les pertes et dommages causés à ces composants sont limités voire quasi-nulles grâce à une récupération systématique des composants progressant sur la plateforme d'alimentation qui ne sont pas saisis par le bras de préhension articulé.

### Brève description des figures

D'autres caractéristiques et avantage de la présente invention apparaîtront à la lecture de plusieurs formes de réalisation données uniquement à titre d'exemples non limitatifs et faites en référence aux dessins annexés dans lesquels :
- la figure 1 est une représentation schématique relative à un système de distribution contrôlée de composants horlogers pour une installation d'assemblage automatique de tout ou partie d'une pièce d'horlogerie, selon un mode de réalisation de l'invention, et
- les figures 2 à 5 sont des vues d'un dispositif vibrant du système de distribution, selon le mode de réalisation de l'invention.

### Description détaillée de l'invention

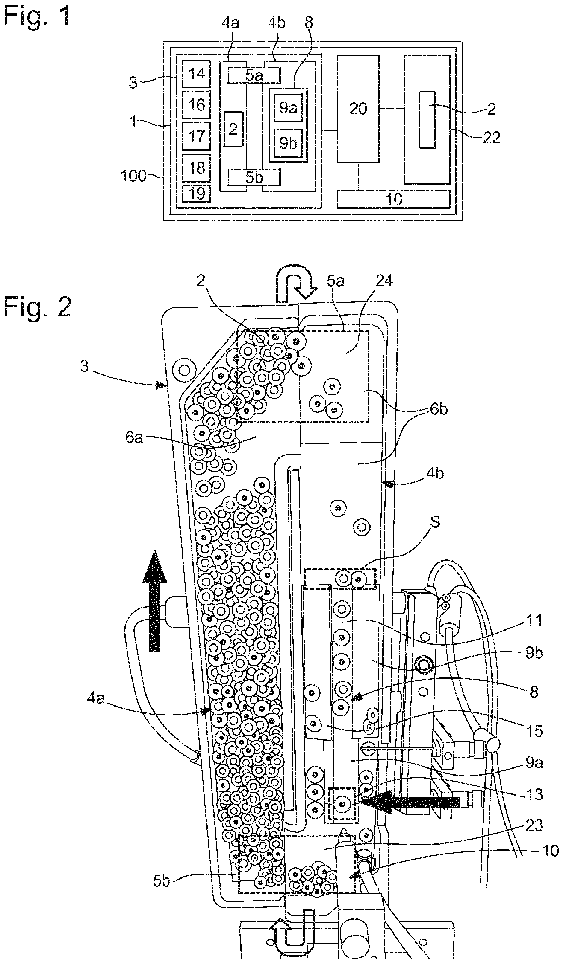

En référence à la figure 1, le système de distribution 1 contrôlée de composants 2 notamment de composants horlogers 2 comprend un dispositif vibrant 3 et un bras de préhension articulé 10 ainsi qu'une unité de contrôle 20 participant en tout ou partie au fonctionnement de ce système 1.

Dans le présent mode de réalisation de l'invention, les composants 2 distribués sont des composants horlogers 2. On comprend que n'importe quel type de composant peut être distribué par ce système 1 notamment dès lors qu'il s'agit d'un objet de taille millimétrique notamment de moins de 20 mm. Dans ce contexte, un tel système 1 est prévu pour assurer la distribution de composants horlogers 2 à une machine d'une installation d'assemblage automatique 100 ou chaîne d'assemblage automatique de tout ou partie d'une pièce d'horlogerie. On notera que les composants horlogers 2 distribués dans ce système 1 sont de préférence des objets de révolution de taille millimétrique notamment de moins de 20 mm.

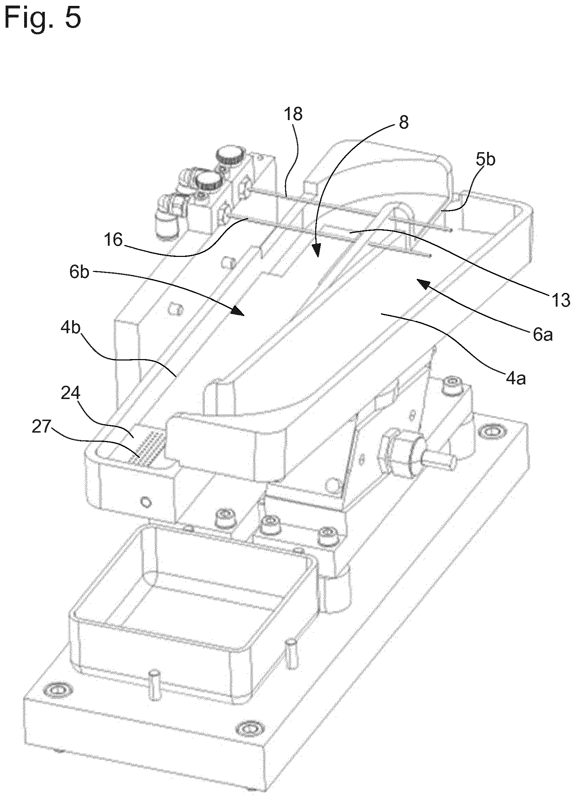

Sur les figures 2 à 5, ce dispositif 3 est pourvu de premier et deuxième compartiments 4a, 4b reliés entre eux en leurs extrémités par des première et deuxième zones de passage 5a, 5b de ce dispositif 3 de manière à former un circuit fermé dans lequel les composants horlogers 2 sont susceptibles de circuler. Chacun de ces deux compartiments 4a, 4b comprend des parois avant, arrière et latérales, les parois latérales étant pourvues d'ouvertures au niveau des zones de passage 5a, 5b. Dans ce dispositif 3, les composants horlogers 2 sont introduits en vrac dans le premier compartiment 4a. Dans ce système 1, ce dispositif 3 est amené à vibrer par rapport à son socle fixe à partir d'éléments électromécaniques 19 qui ne sont pas détaillés ici.

Dans ce système, la première zone de passage 5a comprend les extrémités des premier et deuxième compartiments 4a, 4b ainsi qu'un dénivelé présent entre les premier et deuxième plans inclinés 6a, 6b définis dans ces extrémités avec le premier plan incliné 6a qui est localisé au-dessus du deuxième plan incliné 6b. S'agissant de la deuxième zone de passage 5b, elle comprend des extrémités des premier et deuxième compartiments 4a, 4b ainsi qu'un dénivelé présent entre le premier plan incliné 6a et un fond 23 du deuxième compartiment 4b définis dans ces extrémités avec le fond 23 qui est localisé au-dessus du premier plan incliné 6a. Ces première et deuxième zones de passage 5a, 5b sont comprises dans des portions du circuit formé dans ce dispositif 3 qui correspondent à des virages que doivent emprunter les composants horlogers 2. Ces première et deuxième zones de passage 5a, 5b participent donc à rendre ce dispositif plus compact. On notera que cette première zone de passage 5a peut comprendre une portion 28 inclinée visant à guider les composants horlogers 2 vers le centre du deuxième compartiment 4b.

Un tel dispositif 3 comprend des premier et deuxième plans inclinés 6a, 6b en sens opposés compris respectivement dans les premier et deuxième compartiments 4a, 4b. Dans le premier compartiment 4a, le premier plan incliné 6a est formé par le fond du premier compartiment 4a. Ce fond peut d'ailleurs comprendre un revêtement amovible permettant de faciliter le déplacement/la progression des composants horlogers 2 dans ce premier compartiment 4a.

De tels premier et deuxième plans inclinés 6a, 6b contribuent à assurer l'acheminement des composants horlogers 2 initialement déversés en vrac dans ce dispositif 3 du fond vers la sortie S du deuxième plan incliné 6b qui débouche sur une plateforme d'alimentation 8. Plus précisément, les éléments électromécaniques 19 permettent d'animer le dispositif 3 d'un mouvement vibratoire pour faire cheminer les composants horlogers 2 contenus dans le dispositif 3, notamment l'un après l'autre, le long de premier et deuxième plans inclinés 6a, 6b vers cette plateforme d'alimentation 8. Ces plans 6a, 6b sont inclinés l'un par rapport à l'autre.

Dans ce dispositif 3, la plateforme d'alimentation 8 autrement appelée glissière, est agencée dans le dispositif 3 afin de recevoir les composants horlogers 2 provenant du deuxième plan incliné 6b et de participer à une sélection/tri de ces composants horlogers 2 qui ne présentent pas une orientation attendue susceptible d'assurer leur saisie optimale par le bras de préhension articulé 10 en prévision de leur distribution dans l'installation d'assemblage automatique 100 de tout ou partie d'une pièce d'horlogerie.

Une telle plateforme d'alimentation 8 est reliée à la sortie S du deuxième plan incliné 6b et ce, en étant agencée dans la continuité de ce deuxième plan incliné 6b. Cette plateforme d'alimentation 8 est de préférence venue de matière avec le deuxième plan incliné 6b. On notera cependant que cette plateforme d'alimentation 8 peut être une pièce rapportée qui est fixée à ce deuxième plan incliné 6b au niveau de sa sortie S. Dans ce dispositif 3, cette plateforme d'alimentation 8 s'étend longitudinalement entre la sortie S du deuxième plan incliné 6b et la deuxième zone passage 5b. Plus précisément, la plateforme d'alimentation 8 est agencée à équidistance des parois latérales du deuxième compartiment 4b. En outre, la plateforme d'alimentation 8 s'étend longitudinalement dans le deuxième compartiment 4b en ayant une extrémité libre comprise entre la sortie S du deuxième plan incliné 6b et la deuxième zone de passage 5b.

Une telle plateforme d'alimentation 8 comprend des première et deuxième parties 9a, 9b ayant des fonctions différentes dans le cadre du fonctionnement de ce dispositif 3. Dans cette configuration, la première partie 9a présente :
- une longueur supérieure ou sensiblement supérieure à une longueur de la deuxième partie 9b, et
- une largueur inférieure ou sensiblement inférieure à une largueur de la deuxième partie 9b.

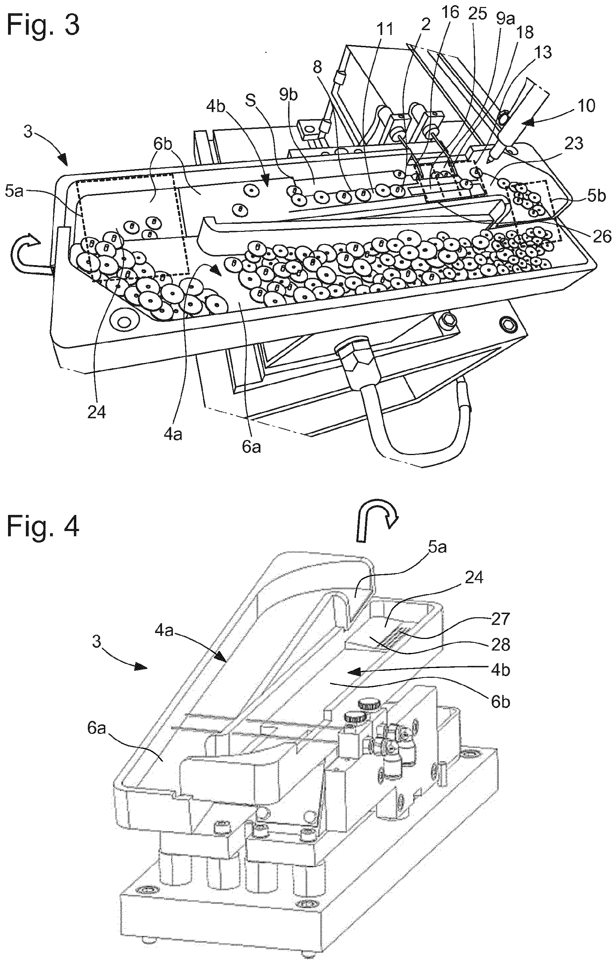

Cette première partie 9a comprend une face supérieure 11 plane 11 formant un support sur lequel les composants horlogers 2 provenant du deuxième plan incliné 6b sont susceptibles de se déplacer en vue de leur saisie par le bras de préhension 10. On notera qu'une telle face supérieure 11 peut comprendre une rainure 25 (visible sur la figure 3) s'étendant longitudinalement dans cette face pour participer à une configuration de l'orientation du composant horloger 2 en prévision de sa saisie par le bras de préhension 10 ou encore pour guider leur déplacement sur cette première partie 9a. Une telle face supérieure 11 s'étend de manière rectiligne en ayant sa face supérieure 11 comprise dans un plan comportant une surface plane du deuxième plan incliné 6b. Cette première partie 9a comprend l'extrémité libre pourvue d'une zone de distribution 13 du composant devant être saisi par le bras de préhension articulé 10. On notera que la face supérieure 11 présente un dénivelé avec un fond 23 du deuxième compartiment 4b en étant agencée dans ce deuxième compartiment 4b au-dessus de ce fond 23.

Dans cette plateforme d'alimentation 8, la deuxième partie 9b comprend deux portions de guidage 15. Cette deuxième partie 9b est venue de matière avec la première partie 9a en ayant les deux portions de guidage 15 définies sur une partie des côtés latéraux de la première partie 9a. Dans cette configuration, chaque portion de guidage 15 s'étend transversalement d'un côté latéral de la première partie 9a vers la paroi latérale correspondante du deuxième compartiment 4b. Plus précisément, ces deux portions de guidage 15 s'étendent longitudinalement entre la sortie S du deuxième plan incliné 6b et une zone de de tri/sélection 26 comprise sur la face supérieure 11 de la première partie 9a. Les extrémités latéraux de ces deux portions de guidage 15 sont agencées à proximité immédiate des parois latérales du deuxième compartiment 4b voire au contact avec ces parois. Ces deux portions de guidage 15 ainsi reliées à la première partie 9a présentent avec cette dernière une section transversale de forme essentiellement trapézoïdale avec les deux portions de guidage 15 qui forme chacune un angle obtus avec la première partie 9a. Ces portions de guidage 15 sont prévues pour diriger le ou les composants horlogers 2 qui ont été évacués de cette plateforme 8 notamment par un dispositif de tri/sélection 16 décrit par la suite. Ces portions de guidage 15 permettent dans ces conditions, d'orienter systématiquement ces composants 2 dans le deuxième compartiment 4b quel que soit le côté latéral de la face supérieure 11 de la plateforme 8 qu'ils ont été amenés à chevaucher pour rejoindre ce deuxième compartiment 4b.

On notera de manière alternative que la première partie 9a peut être une plaque plane, présentant une section de préférence rectangulaire comprenant en plus de la face supérieure 11, une face inférieure de préférence plane. Dans cette configuration, la deuxième partie 9b peut comprendre en plus des portions de guidage 15, une portion de liaison qui est reliée mécaniquement à la face inférieure de la première partie 9a de la plateforme d'alimentation 8. Dans ce contexte, la face inférieure de la première partie 9a peut être reliée mécaniquement à la portion de liaison de la deuxième partie 9b par soudage, collage ou encore emboitage.

Ainsi que nous l'avons précédemment évoqué, le dispositif 3 comprend également un détecteur de présence 14 du composant horloger 2 agencé dans la zone de distribution 13 de la plateforme d'alimentation 8. Un tel détecteur 14 comprend par exemple au moins un capteur de pression à vide et/ou au moins un capteur optique. Ce détecteur de présence 14 est de préférence agencé dans la plateforme d'alimentation 8 en particulier au niveau de cette zone de distribution 13.

Ce dispositif 3 comprend aussi un dispositif de tri/sélection 16 des composants horlogers 2 qui est positionné à proximité de la zone de tri/sélection 26 (visible sur la figure 3) définie dans le face supérieure 11 de la première partie 9a de la plateforme d'alimentation 8. Un tel agencement du dispositif de tri/sélection 16 par rapport à cette première partie 9a permet à ce dernier de pouvoir évacuer de la face supérieure 11 le ou les composants horlogers 2 qui ne présentent pas une orientation correcte pour pouvoir assurer leur saisie de manière optimale par le bras de préhension 10 lorsqu'ils seront positionnés dans la zone de distribution 13. Un tel dispositif de tri/sélection 16 comprend au moins un élément de projection/pulvérisation d'un fluide tel qu'une buse d'air reliée à un compresseur d'air. Dans ce dispositif 3, une seule buse d'air est agencée au niveau de la zone de tri/sélection 26. Autrement dit, ce dispositif 16 est apte à diriger un flux de fluide tel que de l'air vers la zone de tri/sélection 26 de la face supérieure 11 de la première partie 9a.

Le dispositif 3 comprend également un dispositif de protection 18 du composant horloger 2 qui est agencé dans la zone de distribution 13 en prévision de sa saisie par le bras de préhension 10. Ce dispositif de protection 18 comprend aussi au moins un élément de projection/pulvérisation d'un fluide tel qu'une buse d'air relié à un compresseur d'air. Dans ce dispositif 3, cette buse d'air est de préférence à proximité d'une portion de la face supérieure 11 agencée entre la la zone de tri/sélection 26 et la zone de distribution 13 et ce, de manière à pouvoir pulvériser/projeter un flux d'air dans cette portion lorsqu'un composant horloger 2 est agencé dans la zone de distribution 13. Autrement dit, ce dispositif 18 est apte à diriger un flux de fluide tel que de l'air vers cette portion de la face supérieure 11.

Ce dispositif 3 peut aussi comprendre un dispositif de séparation 17 (non représenté) d'au moins deux composants horlogers 2, agencé au-dessus de la zone de distribution 13. Ce dispositif 17 peut comprendre au moins deux éléments flexibles montés sur un bras fixe visant à les positionnés au-dessus de cette zone de distribution 13. Plus précisément, il peut s'agir de trois éléments flexibles dont les extrémités libres sont positionnées pour présenter un écart entre eux qui est inférieur ou sensiblement inférieur à la plus grande dimension du composant horloger 2 afin d'assurer une séparation entre deux de ces composants horlogers 2 qui seraient collés l'un a l'autre à cause de matière huileuse dont ils sont en tout ou partie enduits. Dans ce contexte après une séparation, le composant horloger 2 saisi par le bras de préhension 10 est alors distribué dans l'installation d'assemblage automatique 100 et l'autre composant horloger 2 est diriger vers l'enceinte 4 du dispositif 3.

On notera que l'utilisation de l'air dans les dispositifs de tri/sélection 16 et de protection permet d'engendrer un déplacement d'un composant horloger 2 sans l'endommager.

Les dispositifs de tri/sélection 16, de séparation 17 et dispositif de protection 18 sont agencés sur un même bras fixe.

Dans ce système 1, ainsi que nous l'avons vu, le bras de préhension articulé 10 est prévu pour assurer la distribution desdits composants horlogers 2 à ladite installation d'assemblage automatique 100.

Ce système 1 comprend aussi une unité de contrôle 20 qui est connectée au dispositif 3 en particulier à des composantes de ce dispositif 3 telles que le dispositif de tri/sélection 16, le dispositif de séparation 17, le détecteur de présence 14, le dispositif de protection 18 et les éléments électromécaniques 19.

Cette unité de contrôle 20 est également connectée au bras de préhension articulé 10 ainsi qu'à un dispositif d'alimentation 22 du dispositif 3 en composants horlogers 2 de ce système 1. Une telle unité de contrôle 20 peut être un ordinateur, et comprend des ressources matérielles et logicielles en particulier au moins un processeur coopérant avec des éléments de mémoire. Cette unité de contrôle 20 est apte à exécuter des instructions pour la mise en oeuvre d'un programme d'ordinateur afin d'assurer le pilotage de ces composantes du dispositif 3 et du bras de préhension 10 dans le cadre de la distribution de ces composants horlogers 2 dans l'installation d'assemblage automatique 100.

En outre, on notera que la première zone de passage 5a comprend une trappe 24 permettant de fermer/ouvrir une ouverture pratiquée dans le deuxième plan incliné 6b contribuant à évacuer les composants horlogers 2 du dispositif vibrant 3. La surface externe de cette trappe 24 comprend des ouvertures 27 prévues pour évacuer des poussières et/ou des copeaux.

Dans ce contexte, ce système 1 permet de mettre en oeuvre un procédé de distribution contrôlée de composants horlogers 2. Ce procédé comprend une étape d'introduction dans le premier compartiment 4a du dispositif 3 des composants horlogers 2 légèrement huilés à distribuer. Lors de cette étape, l'unité de contrôle 20 pilote alors le dispositif d'alimentation 22 du dispositif 3 en composants horlogers 2. Par la suite, lors d'une étape de fonctionnement du dispositif 3, l'unité de contrôle 20 active les éléments électromécaniques 19 de manière à amener le dispositif 3 à vibrer par rapport à son socle fixe et provoquer le cheminement des composants horlogers 2 le long d'abord du premier plan incliné 6a ensuite de la première zone de passage 5a et par la suite du deuxième plan incliné 6b jusqu'à parvenir de préférence l'un après l'autre sur la face supérieure 11 de la plateforme d'alimentation 8. Sur la zone de tri/sélection 26 de la face supérieure 11, ces composants horlogers 2 sont exposés à un flux d'air provenant du dispositif de tri/sélection 16 du dispositif 3 qui vise à écarter ceux d'entre eux qui ne présentent pas une orientation correcte en prévision de leur saisie par le bras de préhension articulé 10. Les composants horlogers 2 qui sont dans ces conditions évacués de cette face supérieure 11 sont alors dirigés systématiquement par les portions de guidage 15 de la plateforme d'alimentation 8 vers le fond 23 du deuxième compartiment 4b pour être ensuite dirigés, sous l'effet des vibrations, vers la deuxième zone de passage 5b pour leur acheminement vers le premier compartiment 4a. Les composants horlogers 2 qui sont encore présents sur la face supérieure 11 et qui présentent donc une orientation correcte sont quant à eux, sous l'effet des vibrations, conduits un à un vers la zone de distribution 13. Dans ce contexte, lorsqu'un composant horloger 2 arrive dans la zone de distribution 13, le détecteur de présence 14 identifie le positionnement du composant horloger 2 dans cette zone 13 et transmet un signal en ce sens à l'unité de contrôle 20 qui déclenche alors le processus de saisie de ce composant 2 par le bras de préhension articulé 10 en prévision de sa distribution dans l'installation d'assemblage automatique 100 et le déclenchement du dispositif de protection 18 qui projette/pulvérise un flux d'air dans la portion de la face supérieure 11 comprise entre zone de tri/sélection 26 et la zone de distribution 13 afin d'évacuer de cette portion tout composant horloger 2 qui serait susceptible d'être dirigé vers cette zone de distribution 13 lors de l'exécution du processus de saisie. On notera avantageusement qu'une telle saisie de ce composant horloger 2 est donc réalisée au-dessus ou dans le deuxième compartiment 4b du dispositif 3 permettant en cas d'éventuelle chute du composant horloger 2 que ce dernier retourne systématiquement dans ce deuxième compartiment 4b.

## Revendications

1. Système de distribution (1) contrôlée de composants (2) notamment de composants horlogers pour une installation d'assemblage automatique (100) de tout ou partie d'une pièce réalisée à partir d'au moins un de ces composants (2), notamment d'une pièce d'horlogerie, le système (1) comprenant :
- un dispositif vibrant (3) dans lequel lesdits composants (2) sont introduits en vrac qui est pourvu de premier et deuxième compartiments (4a, 4b) reliés entre eux en leurs extrémités par des première et deuxième zones de passage (5a, 5b) de ce dispositif (3) de manière à former un circuit fermé dans lequel les composants (2) sont susceptibles de circuler, et
- un bras de préhension articulé (10) prévu pour assurer la distribution desdits composants (2) à ladite installation d'assemblage automatique (100) ,
le dispositif vibrant (3) comprenant des premier et deuxième plans inclinés (6a, 6b) en sens opposés compris respectivement dans les premier et deuxième compartiments (4a, 4b), lesdits composants (2) étant susceptibles de cheminer le long des premier et deuxième plans inclinés (6a, 6b) vers une plateforme d'alimentation (8) sur laquelle est susceptible d'être disposé au moins un composant (2) en prévision de sa saisie par le bras de préhension articulé (10), ladite plateforme d'alimentation (8) étant située dans le deuxième compartiment (4b) à une sortie (S) du deuxième plan incliné (6b),
**caractérisé en ce que** la plateforme d'alimentation (8) comprenne aussi des première et deuxième parties (9a, 9b) ladite première partie (9a) est reliée à deux portions de guidage (15), cette première partie (9a) présentant avec ces deux portions de guidage (15) une section transversale de forme essentiellement trapézoïdale, les deux portions de guidage (15) formant chacune un angle obtus avec cette première partie (9a) et ladite deuxième partie (9b) comprenant deux portions de guidage (15) et étant venue de matière avec la première partie (9a) en ayant les deux portions de guidage (15) définies sur une partie des côtés latéraux de la première partie (9a), chaque portion de guidage (15) s'étendant transversalement d'un côté latéral de la première partie (9a) vers la paroi latérale correspondante du deuxième compartiment (4b), ces deux portions de guidage (15) s'étendant longitudinalement entre une sortie (S) du deuxième plan incliné (6b) et une zone de de tri/sélection (26) comprise sur la face supérieure (11) de la première partie (9a), des extrémités latérales de ces deux portions de guidage (15) sont agencées à proximité immédiate de parois latérales du deuxième compartiment (4b) voire au contact avec ces parois.

2. Système (1) selon la revendication précédente, **caractérisé en ce que** la plateforme d'alimentation (8) est agencée dans le deuxième compartiment (4b) dans la continuité du deuxième plan incliné (6b) en étant reliée mécaniquement à ce deuxième plan incliné (6b).

3. Système (1) selon l'une quelconque des revendications 1 et 2, **caractérisé en ce que** la plateforme d'alimentation (8) s'étend longitudinalement entre la sortie (S) du deuxième plan incliné (6b) et le deuxième zone passage (5b).

4. Système (1) selon l'une quelconque des revendications 1 à 3, **caractérisé en ce que** la plateforme d'alimentation (8) comprend des première et deuxième parties (9a, 9b).

5. Système (1) selon la revendication précédente, **caractérisé en ce que** la première partie (9a) qui présente :
- une longueur supérieure ou sensiblement supérieure à une longueur de la deuxième partie (9b), et
- une largueur inférieure ou sensiblement inférieure à une largueur de la deuxième partie (9b).

6. Système (1) selon l'une quelconque des revendications 4 et 5, **caractérisé en ce que** la première partie (9a) comprend une face supérieure (11) plane formant un support sur lequel les composants (2) sont susceptibles de se déplacer en vue de leur saisie par le bras de préhension articulé (10).

7. Système (1) selon la revendications précédente, **caractérisé en ce que** la première partie (9a) s'étend de manière rectiligne en ayant sa face supérieure (11) comprise dans un plan comportant une surface plane du deuxième plan incliné (6b).

8. Système (1) selon l'une quelconque des revendications 6 et 7, **caractérisé en ce que** la première partie (9a) de la plateforme d'alimentation (8) comprend la face supérieure (11) pourvue d'une zone de distribution (13) comprise sensiblement à son extrémité libre et dans laquelle zone (13) est disposé le composant (2) en prévision de sa saisie par le bras de préhension articulé (10).

9. Système (1) selon l'une quelconque des revendications 6 à 8, **caractérisé en ce que** la face supérieure (11) présente un dénivelé avec un fond (23) du deuxième compartiment (4b) en étant agencée dans ce deuxième compartiment (4b) au-dessus de ce fond (23).

10. Système (1) selon l'une quelconque des revendications 8 et 9, **caractérisé en ce que** la première partie (9a) de la plateforme d'alimentation (8) comprend un détecteur de présence (14) du composant (2) agencé dans la zone de distribution (13).

11. Système (1) selon l'une quelconque des revendications 4 à 10, **caractérisé en ce que** la deuxième partie (9b) de la plateforme d'alimentation (8) comprend deux portions de guidage (15).

12. Système (1) selon la revendication précédente, **caractérisé en ce que** les portions de guidage (15) sont définies pour diriger les composants (2) vers des parois latérales du deuxième compartiment (4b) au moins un composant (2) initialement présent sur la première partie (9a) de cette plateforme d'alimentation (8) et qui en est évacué.

13. Système (1) selon l'une quelconque des revendications 11 et 12, **caractérisé en ce que** le dispositif vibrant (3) comprend un dispositif de tri/sélection (16) des composants (2) défini à proximité de la première partie (9a) de la plateforme d'alimentation (8) notamment apte à diriger un flux de fluide tel que de l'air vers une face supérieure (11) de la première partie (9a).

14. Système (1) selon l'une quelconque des revendications 1 à 13, **caractérisé en ce que** le dispositif vibrant (3) comprend un dispositif de séparation (17) d'au moins deux composants (2) agencé au-dessus de la zone de distribution (13).

15. Système (1) selon l'une quelconque des revendications 1 à 14, **caractérisé en ce que** la première zone de passage (5a) comprend les extrémités des premier et deuxième compartiments (4a, 4b) ainsi qu'un dénivelé présent entre les premier et deuxième plans inclinés (6a, 6b) définis dans ces extrémités avec le premier plan incliné (6a) qui est localisé au-dessus du deuxième plan incliné (6b).

16. Système (1) selon l'une quelconque des revendications 9 à 15, **caractérisé en ce que** la deuxième zone de passage (5b) comprend les extrémités des premier et deuxième compartiments (4a, 4b) ainsi qu'un dénivelé présent entre le premier plan incliné (6a) et le fond (23) définis dans ces extrémités avec le fond (23) qui est localisé au-dessus du premier plan incliné (6a).

17. Système (1) selon l'une quelconque des revendications précédentes **caractérisé en ce que** la première zone de passage (5a) comprend une trappe (24) prévue pour fermer/ouvrir une ouverture pratiquée dans le deuxième plan incliné (6b) permettant d'évacuer les composants (2) du dispositif vibrant (3).

18. Système (1) selon l'une quelconque des revendications 1 à 17, **caractérisé en ce que** le composant (2) est sélectionné parmi des composants (2) notamment comprenant des objets de révolution de taille millimétrique.

19. Installation d'assemblage automatique (100) de tout ou partie d'une pièce réalisée à partir d'au moins un composant, notamment d'une pièce d'horlogerie, comprenant au moins un système de distribution (1) contrôlée de composants (2) selon l'une quelconque des revendications 1 à 18.

## Patentansprüche

1. Kontrolliertes Verteilungssystem (1) von Komponenten (2), insbesondere von Uhrenkomponenten, für eine automatische Montageanlage (100) eines ganz oder teilweise aus mindestens einer dieser Komponenten (2) hergestellten Teils, insbesondere einer Uhr, wobei das System (1) umfasst:
- eine Vibrationsvorrichtung (3), in die die Komponenten (2) in loser Schüttung eingebracht werden und die mit einem ersten und einem zweiten Fach (4a, 4b) versehen ist, die an ihren Enden durch einen ersten und einen zweiten Durchgangsbereich (5a, 5b) dieser Vorrichtung (3) miteinander verbunden sind, um einen geschlossenen Kreislauf zu bilden, in dem die Komponenten (2) umlaufen können, und
- einen angelenkten Greifarm (10), der dazu vorgesehen ist, die Verteilung der Komponenten (2) in der automatischen Montageanlage (100) zu gewährleisten,
wobei die Vibrationsvorrichtung (3) eine erste und eine zweite Ebene (6a, 6b) aufweist, die in entgegengesetztem Richtungssinn geneigt sind und jeweils in dem ersten und dem zweiten Fach (4a, 4b) enthalten sind, wobei die Komponenten (2) längs der ersten und der zweiten geneigten Ebene (6a, 6b) zu einer Beschickungsplattform (8) geleitet werden können, auf der mindestens eine Komponente (2) zur Vorbereitung ihrer Aufnahme durch den angelenkten Greifarm (10) angeordnet werden kann, wobei die Beschickungsplattform (8) sich in dem zweiten Fach (4b) an einem Ausgang (S) der zweiten geneigten Ebene (6b) befindet,
**dadurch gekennzeichnet, dass** die Beschickungsplattform (8) ferner einen ersten und einen zweiten Teil (9a, 9b) aufweist, wobei der erste Teil (9a) mit zwei Führungsabschnitten (15) verbunden ist, und dieser erste Teil (9a) mit diesen beiden Führungsabschnitten (15) einen im Wesentlichen trapezförmigen Querschnitt bildet, wobei die beiden Führungsabschnitte (15) mit diesem ersten Teil (9a) bzw. mit dem zweiten Teil (9b), der zwei Führungsabschnitte (15) besitzt und mit dem ersten Teil (9a) einstückig ausgebildet ist, indem die beiden Führungsabschnitte (15) auf einem Teil der Seitenflächen des ersten Teils (9a) definiert sind, jeweils einen stumpfen Winkel bilden, wobei sich jeder Führungsabschnitt (15) quer von einer Seitenfläche des ersten Teils (9a) in Richtung der entsprechenden Seitenwand des zweiten Fachs (4b) erstreckt, wobei sich diese beiden Führungsabschnitte (15) in Längsrichtung zwischen einem Ausgang (S) der zweiten geneigten Ebene (6b) und einem Sortier-/Auswahl-Bereich (26) erstrecken, den die Oberseite (11) des ersten Teils (9a) aufweist, wobei die seitlichen Enden dieser beiden Führungsabschnitte (15) in direkter Nähe der Seitenwände des zweiten Faches (4b) oder sogar in Kontakt mit diesen Wänden angeordnet sind.

2. System (1) nach dem vorhergehenden Anspruch, **dadurch gekennzeichnet, dass** die Beschickungsplattform (8) in dem an die zweite geneigte Ebene (6b) anschließend angeordneten zweiten Fach (4b) mit dieser zweiten geneigten Ebene (6b) mechanisch verbunden ist.

3. System (1) nach einem der Ansprüche 1 und 2, **dadurch gekennzeichnet, dass** sich die Beschickungsplattform (8) in Längsrichtung zwischen dem Ausgang (S) der zweiten geneigten Ebene (6b) und dem zweiten Durchgangsbereich (5b) erstreckt.

4. System (1) nach einem der Ansprüche 1 bis 3, **dadurch gekennzeichnet, dass** die Beschickungsplattform (8) einen ersten und einen zweiten Teil (9a, 9b) umfasst.

5. System (1) nach dem vorhergehenden Anspruch, **dadurch gekennzeichnet, dass** der erste Teil (9a) aufweist:
- eine Länge, die größer oder im Wesentlichen größer als eine Länge des zweiten Teils (9b) ist, und
- eine Breite, die kleiner oder im Wesentlichen kleiner als eine Breite des zweiten Teils (9b) ist.

6. System (1) nach einem der Ansprüche 4 und 5, **dadurch gekennzeichnet, dass** der erste Teil (9a) eine ebene Oberseite (11) aufweist, die eine Auflage bildet, auf der die Komponenten (2) für ihre Aufnahme durch den angelenkten Greifarm (10) bewegbar sind.

7. System (1) nach dem vorhergehenden Anspruch, **dadurch gekennzeichnet, dass** sich der erste Teil (9a) geradlinig erstreckt, wobei seine Oberseite (11) in einer Ebene liegt, die eine ebene Oberfläche der zweiten geneigten Ebene (6b) umfasst.

8. System (1) nach einem der Ansprüche 6 und 7, **dadurch gekennzeichnet, dass** der erste Teil (9a) der Beschickungsplattform (8) die Oberseite (11) aufweist, die mit einem Verteilungsbereich (13) versehen ist, der im Wesentlichen an seinem freien Ende enthalten ist, wobei in dem Bereich (13) die Komponente (2) zur Vorbereitung ihrer Aufnahme durch den angelenkten Greifarm (10) angeordnet ist.

9. System (1) nach einem der Ansprüche 6 bis 8, **dadurch gekennzeichnet, dass** die Oberseite (11) mit einem Boden (23) des zweiten Faches (4b) eine Stufe bildet, wobei sie in diesem zweiten Fach (4b) oberhalb dieses Bodens (23) angeordnet ist.

10. System (1) nach einem der Ansprüche 8 und 9, **dadurch gekennzeichnet, dass** der erste Teil (9a) der Beschickungsplattform (8) einen in dem Verteilungsbereich (13) angeordneten Detektor (14) für die Anwesenheit der Komponente (2) umfasst.

11. System (1) nach einem der Ansprüche 4 bis 10, **dadurch gekennzeichnet, dass** der zweite Teil (9b) der Beschickungsplattform (8) zwei Führungsabschnitte (15) aufweist.

12. System (1) nach dem vorhergehenden Anspruch, **dadurch gekennzeichnet, dass** die Führungsabschnitte (15) so definiert sind, dass sie die Komponenten (2) in Richtung der Seitenwände des zweiten Faches (4b) lenken, wobei sich mindestens eine Komponente (2) anfangs auf dem ersten Teil (9a) dieser Beschickungsplattform (8) befindet und daraus entnommen wird.

13. System (1) nach einem der Ansprüche 11 und 12, **dadurch gekennzeichnet, dass** die Vibrationsvorrichtung (3) eine Sortier-/Auswahl-Vorrichtung (16) für die Komponenten (2) umfasst, die in der Nähe des ersten Teils (9a) der Beschickungsplattform (8) definiert ist und geeignet ist, insbesondere einen Fluidstrom wie etwa einen Luftstrom in Richtung einer Oberseite (11) des ersten Teils (9a) zu lenken.

14. System (1) nach einem der Ansprüche 1 bis 13, **dadurch gekennzeichnet, dass** die Vibrationsvorrichtung (3) oberhalb des Verteilungsbereichs (13) eine Vorrichtung (17) zum Trennen von mindestens zwei Komponenten (2) umfasst.

15. System (1) nach einem der Ansprüche 1 bis 14, **dadurch gekennzeichnet, dass** der erste Durchgangsbereich (5a) die Enden des ersten und des zweiten Faches (4a, 4b) sowie eine Stufe umfasst, die sich zwischen der ersten und der zweiten geneigten Ebene (6a, 6b), die in diesen Enden definiert sind, befindet, wobei sich die erste geneigte Ebene (6a) oberhalb der zweiten geneigten Ebene (6b) befindet.

16. System (1) nach einem der Ansprüche 9 bis 15, **dadurch gekennzeichnet, dass** der zweite Durchgangsbereich (5b) die Enden des ersten und des zweiten Faches (4a, 4b) sowie eine Stufe umfasst, die sich zwischen der ersten geneigten Ebene (6a) und dem Boden (23), die in diesen Enden definiert sind, befindet, wobei sich der Boden (23) oberhalb der ersten geneigten Ebene (6a) befindet.

17. System (1) nach einem der vorhergehenden Ansprüche, **dadurch gekennzeichnet, dass** der erste Durchgangsbereich (5a) eine Klappe (24) aufweist, die dazu vorgesehen ist, eine in der zweiten geneigten Ebene (6b) ausgebildete Öffnung zu verschließen/zu öffnen, was die Entnahme der Komponenten (2) aus der Vibrationsvorrichtung (3) ermöglicht.

18. System (1) nach einem der Ansprüche 1 bis 17, **dadurch gekennzeichnet, dass** die Komponente (2) aus Komponenten (2) ausgewählt wird, die insbesondere millimetergroße rotationssymmetrische Objekte umfassen.

19. Automatische Montageanlage (100) eines ganz oder teilweise aus mindestens einer Komponente hergestellten Teils, insbesondere einer Uhr, die mindestens ein kontrolliertes Verteilungssystem (1) von Komponenten (2) nach einem der Ansprüche 1 bis 18 umfasst.

## Claims

1. System (1) for controlled distribution of components (2), particularly components for timepieces, for an installation (100) for automatic assembly of all or part of an article produced from at least one of these components (2), particularly of a timepiece, the system (1) comprising:
- a vibrating device (3) in which said components (2) are placed in bulk, which is provided with first and second compartments (4a, 4b) connected together at their ends by first and second passage zones (5a, 5b) of this device (3) such as to form a closed circuit in which the components (2) can flow, and
- an articulated gripping arm (10) provided to distribute said components (2) to said automatic assembly installation (100),
the vibrating device (3) comprising first and second planes (6a, 6b) inclined in opposite directions included, respectively, in the first and second compartments (4a, 4b), said components (2) being able to progress along the first and second inclined planes (6a, 6b) towards a supply platform (8) on which at least one component (2) can be arranged in advance of its seizure by the articulated gripping arm (10), said supply platform (8) being located in the second compartment (4b) at an exit (S) of the second inclined plane (6b), **characterised in that** the supply platform (8) also comprises first and second parts (9a, 9b) said first part (9a) is connected to two guide portions (15), this first part (9a) having with these two guide portions (15) a transverse section of essentially trapezoidal shape, the two guide portions (15) each forming an obtuse angle with this first part (9a) and said second part (9b) comprising two guide portions (15) and being integral with the first part (9a) and having the two guide portions (15) defined on a part of the lateral sides of the first part (9a), each guide portion (15) extending transversely from a lateral side of the first part (9a) towards the corresponding side wall of the second compartment (4b), these two guide portions (15) extending longitudinally between an exit (S) of the second inclined plane (6b) and a sorting/selection zone (26) included on the upper face (11) of the first part (9a), from the lateral ends of these two guide portions (15) are arranged in close proximity to lateral walls of the second compartment (4b) or even in contact with these walls.

2. System (1) according to the preceding claim, **characterised in that** the supply platform (8) is arranged in the second compartment (4b) in the continuation of the second inclined plane (6b) while being mechanically connected to this second inclined plane (6b).

3. System (1) according to either of Claims 1 and 2, **characterised in that** the supply platform (8) extends longitudinally between the exit (S) of the second inclined plane (6b) and the second passage zone (5b).

4. System (1) according to any one of Claims 1 to 3, **characterised in that** the supply platform (8) comprises first and second parts (9a, 9b).

5. System (1) according to the preceding claim, **characterised in that** the first part (9a) has:
- a length greater or substantially greater than a length of the second part (9b), and
- a width smaller or substantially smaller than a width of the second part (9b).

6. System (1) according to either of Claims 4 and 5, **characterised in that** the first part (9a) comprises a planar upper face (11) forming a support on which the components (2) can move with a view to their seizure by the articulated gripping arm (10).

7. System (1) according to the preceding claim, **characterised in that** the first part (9a) extends in a rectilinear manner while having its upper face (11) included in a plane comprising a planar surface of the second inclined plane (6b).

8. System (1) according to either of Claims 6 and 7, **characterised in that** the first part (9a) of the supply platform (8) comprises the upper face (11) provided with a distribution zone (13) included substantially at its free end and in which zone (13) the component (2) is arranged in advance of its seizure by the articulated gripping arm (10).

9. System (1) according to any one of Claims 6 to 8, **characterised in that** the upper face (11) is at a different height relative to a base (23) of the second compartment (4b) while being arranged in this second compartment (4b) above this base (23).

10. System (1) according to either of Claims 8 and 9, **characterised in that** the first part (9a) of the supply platform (8) comprises a device (14) for detecting the presence of the component (2) arranged in the distribution zone (13).

11. System (1) according to any one of Claims 4 to 10, **characterised in that** the second part (9b) of the supply platform (8) comprises two guide portions (15).

12. System (1) according to the preceding claim, **characterised in that** the guide portions (15) are defined in order to direct the components (2) towards lateral walls of the second compartment (4b), at least one component (2) initially present on the first part (9a) of this supply platform (8) and discharged therefrom.

13. System (1) according to either of Claims 11 and 12, **characterised in that** the vibrating device (3) comprises a device (16) for sorting/selecting the components (2) defined close to the first part (9a) of the supply platform (8), which is particularly suitable for directing a stream of fluid, such as air, towards an upper face (11) of the first part (9a).

14. System (1) according to any one of Claims 1 to 13, **characterised in that** the vibrating device (3) comprises a device (17) for separating at least two components (2) arranged above the distribution zone (13).

15. System (1) according to any one of Claims 1 to 14, **characterised in that** the first passage zone (5a) comprises the ends of the first and second compartments (4a, 4b) and also a difference in level present between the first and second inclined planes (6a, 6b) defined in these ends with the first inclined plane (6a) which is located above the second inclined plane (6b).

16. System (1) according to any one of Claims 9 to 15, **characterised in that** the second passage zone (5b) comprises the ends of the first and second compartments (4a, 4b) and also a difference in level present between the first inclined plane (6a) and the base (23) defined in these ends with the base (23) which is located above the first inclined plane (6a).

17. System (1) according to any one of the preceding claims, **characterised in that** the first passage zone (5a) comprises a hatch (24) provided in order to close/open an opening made in the second inclined plane (6b) allowing discharge of the components (2) from the vibrating device (3).

18. System (1) according to any one of Claims 1 to 17, **characterised in that** the component (2) is selected from components (2), particularly comprising axisymmetric objects of millimetric size.

19. Installation (100) for automatic assembly of all or part of an article produced from at least one component, particularly of a timepiece, comprising at least one system (1) for controlled distribution of components (2) according to any one of Claims 1 to 18.
